# EUROPEAN PATENT SPECIFICATION

(11) **EP 3 974 224 B1**
(45) Date of publication and mention of the grant of the patent: **01.01.2025**
(21) Application number: 21194406.1
(22) Date of filing: 01.09.2021
(51) Int. Cl.: B60K 1/00, B60W 20/11, B60W 20/14, B60W 20/15, B60W 30/18, B60W 30/19, B60W 20/30, B60W 10/02, B60W 10/06, B60W 10/08, B60W 10/11, B60W 20/10, B60K 6/387, B60K 6/48, B60K 6/547

(54) **AUTOMATIC TRANSMISSION CONTROL DEVICE**
AUTOMATIKGETRIEBESTEUERUNGSVORRICHTUNG
DISPOSITIF DE COMMANDE DE TRANSMISSION AUTOMATIQUE

(30) Priority: 24.09.2020 JP 2020159784
(43) Date of publication of application: 30.03.2022
(73) Proprietor: Suzuki Motor Corporation, Shizuoka 432-8611 (JP)
(72) Inventor: AKAGAWA, Shinya, Hamamatsu-shi, 432-8611 (JP)
(74) Representative: Henkel & Partner mbB

(56) References cited:
- DE-A1- 102017 114 999
- JP-A- 2019 055 771
- US-A1- 2016 137 188

## Description

The present invention relates to an automatic transmission control device.

JP 2019-55771 A discloses that, in order to minimize the deceleration of a vehicle perceived by an occupant of the vehicle during a gear shift phase and, at the same time, reduce energy consumption of an electric motor, when a maximum torque value that can be transmitted by the electric motor is lower than an initial torque value transmitted to the wheels by a heat engine immediately before the start of the gear shift phase, a friction clutch is gradually disengaged in a period of time until the torque transmitted to the wheels by the heat engine reaches a decreased torque value substantially equal to the maximum torque value that can be transmitted by the electric motor, the friction clutch is gradually engaged in a period of time until the torque transmitted to the wheels by the heat engine changes from the decreased torque value to the initial torque value, and the electric motor transmits no torque in each period of time.

However, although JP 2019-55771 A discloses control in the state where the electric motor transmits no torque at the start of the gear shift phase, during actual travel of the vehicle, the gear shift phase may be started while the electric motor performs power generation.

In such a case, in the method disclosed in JP 2019-55771 A, when the speed of disengaging the friction clutch is increased after the torque used for power generation from the heat engine is set to zero in order to reduce variation in torque during a speed change, the speed change takes time, and the driver may perceive a lag feeling of the speed change.

Thus, it is an objective of the present invention to provide an automatic transmission control device that can reduce variation in torque during a speed change and reduce a lag feeling of the speed change perceived by the driver.

In order to solve the above-mentioned problem, the present invention is an automatic transmission control device comprising the features of claim 1.

Thus, according to the present invention, it is possible to reduce variation in torque during a speed change and reduce a lag feeling of the speed change perceived by the driver.

An automatic transmission control device according to the preamble of claim 1 is disclosed in DE 10 2017 114999 A1.
Figure 1 is a schematic configurational diagram of a hybrid vehicle according to an embodiment of the present invention.
Figure 2 is a flow chart showing procedures of a speed-change assist control process of the automatic transmission control device according to the embodiment of the present invention.
Figure 3 is a time chart showing changes in torque in the speed-change assist control process of the automatic transmission control device according to the embodiment of the present invention.
Figure 4 is a time chart showing changes in torque when clutch releasing and connecting speeds are changed in three steps in the speed-change assist control process of the automatic transmission control device according to the embodiment of the present invention.

An automatic transmission control device of an embodiment of the present invention is configured to: be provided to a hybrid vehicle including an engine, a motor, an automatic transmission that changes a speed of rotation of the engine and transmits the rotation to a drive shaft, and a clutch that releases or connects power transmission between the engine and the drive shaft; and include a control unit that controls the automatic transmission and the clutch to switch gear stages of the automatic transmission, the control unit, in a clutch releasing process during a speed change of the automatic transmission, changing a releasing speed of the clutch and causing the motor to output speed-change assist torque, at a timing according to an output state of torque of the motor at a start of the speed change of the automatic transmission.

Thus, the automatic transmission control device according to the embodiment of the present invention can reduce variation in torque during a speed change and reduce a lag feeling of the speed change perceived by the driver.

A hybrid vehicle provided with an automatic transmission control device according to an embodiment of the present invention will be described in detail below with reference to the drawings.

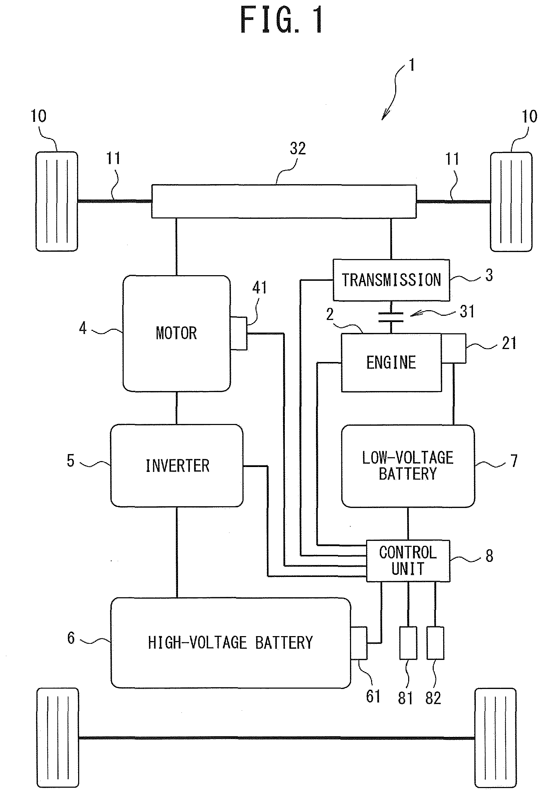

In Figure 1, a hybrid vehicle 1 according to an embodiment of the present invention includes an engine 2 as an internal combustion engine, a transmission 3 as an automatic transmission, a motor 4, an inverter 5, a high-voltage battery 6, a low-voltage battery 7, and a control unit 8.

A plurality of cylinders are formed in the engine 2. In the present embodiment, the engine 2 is configured to perform a series of four processes composed of an intake process, a compression process, an expansion process and an exhaust process for each cylinder.

A starting device 21 is connected to the engine 2. The starting device 21 is connected to a crankshaft of the engine 2 via a belt (not shown). The starting device 21 rotates by being supplied with electric power to rotate the crankshaft and provide starting rotational force to the engine 2.

The starting device 21 includes a starter or an integrated starter generator (ISG). The ISG has an electric motor function of rotating by being supplied with electric power to rotationally drive the engine 2 and an electric generator function of converting rotational force input from the crankshaft of the engine 2 into electric power. Both the starter and the ISG may be provided as the starting device 21.

The transmission 3 changes the speed of rotation output from the engine 2 and drives driving wheels 10 via drive shafts 11. The transmission 3 includes a constant-mesh transmission mechanism (not shown) composed of a paralleled gear mechanism, and an actuator (not shown).

A dry-type single-plate clutch 31 is provided between the engine 2 and the transmission 3, and the clutch 31 connects and disconnects the power transmission between the engine 2 and the transmission 3.

The transmission 3 is configured as what is called an automated manual transmission (AMT), and the switching of the gear stages in the transmission mechanism and the connection and disconnection of the clutch 31 are performed by the actuator (not shown).

A differential mechanism 32 is provided between the transmission 3 and the driving wheels 10. The differential mechanism 32 and the driving wheels 10 are connected by drive shafts 11.

The motor 4 is connected to the differential mechanism 32 via a reducer (not shown) such as a chain. The motor 4 functions as an electric motor. The motor 4 also functions as an electric generator and performs power generation as the hybrid vehicle 1 travels.

The motor 4 is provided with a temperature sensor 41 for detecting the temperature of the motor 4. The temperature sensor 41 is connected to the control unit 8.

Under control of the control unit 8, the inverter 5 converts direct-current electric power supplied from the high-voltage battery 6 or the like into three-phase alternating-current electric power and supplies it to the motor 4.

Under control of the control unit 8, the inverter 5 converts three-phase alternating-current electric power generated by the motor 4 into direct-current electric power. This direct-current electric power charges the high-voltage battery 6, for example.

The high-voltage battery 6 is composed of a lithium-ion storage battery, for example. The high-voltage battery 6 supplies electric power to the inverter 5.

The high-voltage battery 6 is provided with a battery state sensor 61. The battery state sensor 61 detects charge/discharge current, voltage, and battery temperature of the high-voltage battery 6. The battery state sensor 61 is connected to the control unit 8. The control unit 8 can detect the amount of charge of the high-voltage battery 6 based on an output of the battery state sensor 61.

The low-voltage battery 7 is composed of a lead-acid battery, for example. The low-voltage battery 7 supplies electric power to an electrical load of the hybrid vehicle 1 such as the starting device 21.

Thus, the hybrid vehicle 1 forms a parallel hybrid system capable of using power from both of the engine 2 and the motor 4 for driving the vehicle, and travels by means of power output by at least one of the engine 2 and the motor 4.

The control unit 8 is composed of a computer unit including a central processing unit (CPU), a random access memory (RAM), a read only memory (ROM), a flash memory for storing backup data or the like, an input port, and an output port.

The ROM of this computer unit stores a program for causing the computer unit to function as the control unit 8, in addition to various constants, various maps and the like.

In other words, the CPU executes the program stored in the ROM by using the RAM as a workspace, so that the computer unit functions as the control unit 8 in the present embodiment.

In addition to the temperature sensor 41 and the battery state sensor 61 mentioned above, various sensors including an accelerator position sensor 81 and a clutch stroke sensor 82 are connected to the input port of the control unit 8.

The accelerator position sensor 81 detects the amount by which an accelerator pedal (not shown) is operated as an accelerator position. The clutch stroke sensor 82 detects the degree of engagement of the clutch 31.

On the other hand, in addition to the starting device 21, the actuator of the transmission 3, and the inverter 5 mentioned above, various control objects including an injector (not shown) are connected to the output port of the control unit 8.

In the present embodiment, the control unit 8 calculates a driver-required torque required by the driver based on the accelerator position and the like. The control unit 8 controls the engine 2, the transmission 3, the clutch 31, and the motor 4 such that the driver-required torque is output to the driving wheels 10.

In addition, for example, the control unit 8 controls the transmission 3 and the clutch 31, based on a gear shift map for determining the gear stage of the transmission 3 from the accelerator position and the vehicle speed, such that the gear stage of the transmission 3 is changed when a shift line, which is a boundary line between adjacent gear stages, is crossed by a point obtained from the accelerator position and the vehicle speed.

In addition, the control unit 8 causes the motor 4 to output regeneration torque and perform power generation during, for example, a deceleration of the hybrid vehicle 1. In addition, the control unit 8 causes the ISG of the starting device 21 to perform power generation during, for example, a deceleration of the hybrid vehicle 1. Torque used for such power generation is referred to as power generation torque.

In addition, the control unit 8 is configured to perform speed-change assist control of outputting assist torque from the motor 4 to the driving wheels 10 in a period of time where the clutch 31 is released during a speed change.

The "period of time where the clutch 31 is released" refers to a period of time where complete engagement of the clutch 31 is removed (this period of time will hereinafter be referred to as an "incomplete engagement period"), and the incomplete engagement period includes what is called a half-clutch state. The half-clutch state refers to a state where friction members of the clutch 31 engage with each other in a slipping manner to transmit power.

In a vehicle in which the clutch is provided in the power transmission path between the transmission mechanism and the engine, since no torque from the engine is transmitted to the driving wheels in the incomplete engagement period of the clutch during a speed change, loss of acceleration/deceleration feeling, i.e. what is called torque loss occurs, and a free-running feeling is caused by this torque loss.

The speed-change assist control is to avoid the occurrence of the free-running feeling due to torque loss by outputting assist torque from the motor 4 to the driving wheels 10 in the incomplete engagement period of the clutch 31 during a speed change.

The control unit 8 increases the releasing speed of the clutch 31 in a clutch releasing process during a speed change of the transmission 3 and causes speed-change assist torque to be output from the motor 4 at a timing according to the output state of torque of the motor 4 at the start of the speed change.

For example, the control unit 8 increases the releasing speed of the clutch 31 in the clutch releasing process during the speed change of the transmission 3 and causes the speed-change assist torque to be output from the motor 4 at a timing according to the output state of power generation torque at the start of the speed change. The control unit 8 sets the releasing speed of the clutch 31 at the start of the speed change to a first speed, and sets the releasing speed of the clutch 31 to a second speed faster than the first speed at a timing according to the output state of regeneration torque of the motor 4 at the start of the speed change of the transmission 3.

The power generation torque at the start of the speed change is power generation torque output at a predetermined timing after the control unit 8 determines to perform the speed change and before the release of the clutch 31 is started, for example. Note that, in the present embodiment, the power generation torque at the start of the speed change is maintained even after the speed change starts, and the power generation torque at the start of the speed change is output even after the speed change ends.

The clutch releasing process refers to a period of time from when complete engagement of the clutch 31 starts to be removed to when the clutch 31 is completely released.

The control unit 8 increases the releasing speed of the clutch 31 and causes the speed-change assist torque to be output from the motor 4 when the clutch torque is decreased to predetermined torque in the clutch releasing process during the speed change.

The control unit 8 increases the releasing speed of the clutch 31 and causes the speed-change assist torque to be output from the motor 4 when the clutch torque is decreased to GF torque, for example, which is torque obtained by summing maximum motor output torque, which is the maximum torque that can be output by the motor 4 at the start of the speed change, and the power generation torque output by the motor 4 at the start of the speed change, in the clutch releasing process during the speed change.

The clutch torque refers to the torque of an output shaft of the transmission 3, which is output to the differential mechanism 32.

The power generation torque output by the motor 4 refers to the regeneration torque output by the motor 4. The summation of the maximum motor output torque and the power generation torque output by the motor 4 is the addition of the absolute value of the regeneration torque output by the motor 4 to the maximum motor output torque. Alternatively, if torque of the motor 4 for driving the hybrid vehicle 1 is defined as positive torque, the regeneration torque output by the motor 4 is considered to be an opposite, that is negative torque, and therefore torque obtained by subtracting the regeneration torque output by the motor 4 at the start of the speed change from the maximum motor output torque is the GF torque.

The control unit 8 calculates the maximum motor output torque based on the amount of charge of the high-voltage battery 6 or the state of heat generation of the motor 4.

For example, the control unit 8 may calculate the maximum motor output torque at a predetermined period, and increase the clutch releasing speed and cause the speed-change assist torque to be output from the motor 4 at a point of time when the difference between the output torque of the motor 4 at the start of the speed change and the maximum motor output torque becomes equal to the clutch torque.

The control unit 8 may increase the clutch releasing speed and cause the speed-change assist torque to be output from the motor 4 at a point of time when total torque becomes equal to the maximum motor output torque in the clutch releasing process during the speed change.

The total torque is the torque output to the drive shafts 11, and the sum of the clutch torque and the motor torque.

The control unit 8 causes the motor 4 to output, as the speed-change assist torque, torque obtained by subtracting the clutch torque from the maximum motor output torque, after starting to increase the releasing speed of the clutch 31 in the clutch releasing process during the speed change. In other words, the control unit 8 causes the motor 4 to output, as the speed-change assist torque (regeneration torque), negative torque obtained by subtracting the clutch torque from the maximum motor output torque while the clutch torque is larger than the maximum motor output torque, and causes the motor 4 to output, as the speed-change assist torque, positive torque obtained by subtracting the clutch torque from the maximum motor output torque when the clutch torque becomes smaller than the maximum motor output torque.

The control unit 8 sets the connecting speed of the clutch 31 to be faster than that of the clutch 31 after the clutch torque becomes greater than or equal to the GF torque until the clutch torque becomes equal to the GF torque, in a clutch connecting process during the speed change.

The clutch connecting process refers to a period of time from when the engagement of the clutch 31 starts after the switching of the gear stages of the transmission mechanism of the transmission 3 to when the clutch 31 is completely engaged.

When the connecting speed of the clutch 31 until the clutch torque becomes equal to the GF torque is defined as a third speed and the connecting speed of the clutch 31 after the clutch torque becomes greater than or equal to the GF torque is defined as a fourth speed, the control unit 8 sets the third speed to be faster than the fourth speed in the clutch connecting process during the speed change.

The control unit 8, in the clutch connecting process during the speed change, causes the motor 4 to output, as the speed-change assist torque, torque obtained by subtracting the clutch torque from the maximum motor output torque, after starting the engagement of the clutch 31. Then, after the clutch torque becomes equal to the GF torque and the connecting speed of the clutch is decreased, the regeneration torque output by the motor 4 at the start of the speed change is output by the motor 4. In other words, the control unit 8 causes the motor 4 to output, as the speed-change assist torque, positive torque obtained by subtracting the clutch torque from the maximum motor output torque while the clutch torque is smaller than the maximum motor output torque, and causes the motor 4 to output, as the speed-change assist torque (regeneration torque), negative torque obtained by subtracting the clutch torque from the total torque when the clutch torque becomes larger than the maximum motor output torque.

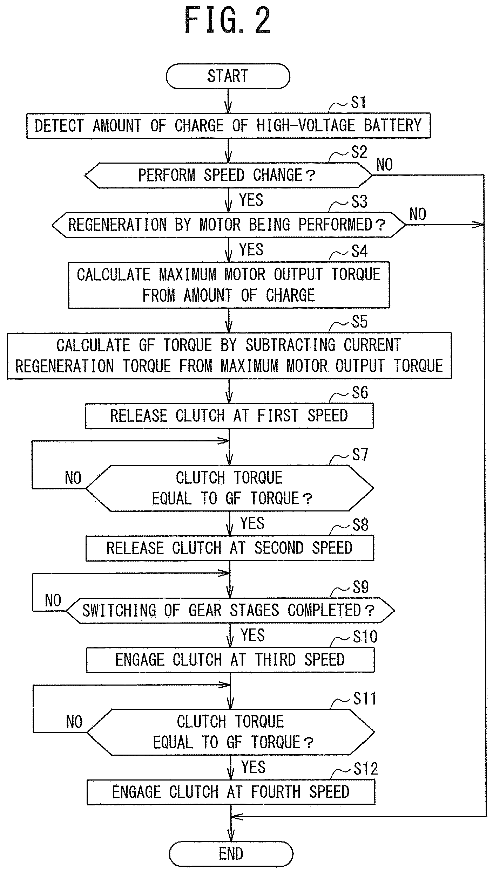

A speed-change assist control process performed by the automatic transmission control device according to the present embodiment configured as described above will be described with reference to Figure 2. Note that the speed-change assist control process described below is started when the control unit 8 starts operation, and is performed at a preset time interval.

In step S1, the control unit 8 detects the amount of charge of the high-voltage battery 6. After performing the process of step S 1, the control unit 8 performs the process of step S2.

In step S2, the control unit 8 determines whether to perform a speed change. For example, the control unit 8 determines whether to perform a speed change based on the vehicle speed, the engine rotation rate, and the like.

When determining to perform a speed change, the control unit 8 performs the process of step S3. When determining not to perform a speed change, the control unit 8 ends the speed-change assist control process.

In step S3, the control unit 8 determines whether regeneration by the motor 4 is currently performed.

When determining that regeneration by the motor 4 is being performed, the control unit 8 performs the process of step S4. When determining that regeneration by the motor 4 is not being performed, the control unit 8 ends the speed-change assist control process.

In step S4, the control unit 8 calculates the maximum motor output torque from the amount of charge of the high-voltage battery 6. After performing the process of step S4, the control unit 8 performs the process of step S5.

In step S5, the control unit 8 subtracts the current regeneration torque from the maximum motor output torque in order to calculate the GF torque. After performing the process of step S5, the control unit 8 performs the process of step S6.

In step S6, the control unit 8 starts to release the clutch 31 at the first speed. After performing the process of step S6, the control unit 8 performs the process of step S7.

In step S7, the control unit 8 determines whether the clutch torque is equal to the GF torque.

When determining that the clutch torque is equal to the GF torque, the control unit 8 performs the process of step S8. When determining that the clutch torque is not equal to the GF torque, the control unit 8 repeats the process of step S7.

In step S8, the control unit 8 starts to release the clutch 31 at the second speed. After performing the process of step S8, the control unit 8 performs the process of step S9.

In step S9, the control unit 8 determines whether switching of the gear stages is completed. When determining that the switching of the gear stages is completed, the control unit 8 performs the process of step S 10. When determining that the switching of the gear stages is not completed, the control unit 8 repeats the process of step S9.

In step S10, the control unit 8 starts to engage the clutch 31 at the third speed. After performing the process of step S10, the control unit 8 performs the process of step S11.

In step S11, the control unit 8 determines whether the clutch torque is equal to the GF torque.

When determining that the clutch torque is equal to the GF torque, the control unit 8 performs the process of step S12. When determining that the clutch torque is not equal to the GF torque, the control unit 8 repeats the process of step S 11.

In step S12, the control unit 8 starts to engage the clutch 31 at the fourth speed. After performing the process of step S12, the control unit 8 ends the speed-change assist control process.

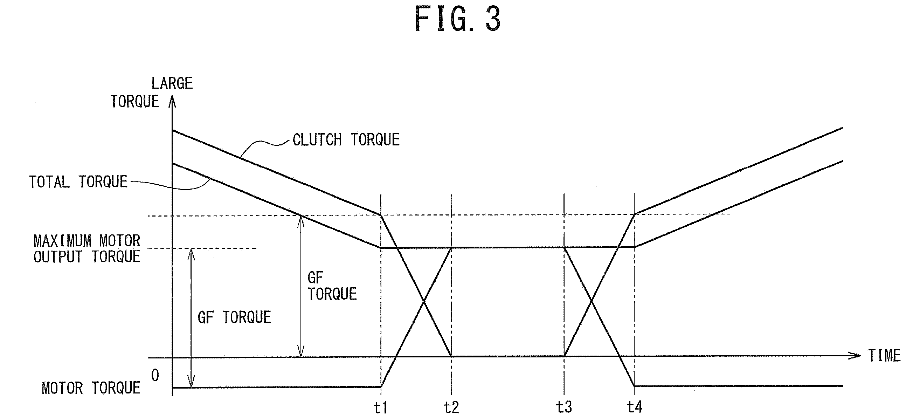

Operations in this speed-change assist control process will be described with reference to Figure 3.

When a speed change process is started and removal of complete engagement of the clutch 31 is started, the clutch 31 is released at the first speed, the clutch torque decreases, and the total torque transmitted to the drive shafts 11 also decreases. At this time, since the clutch torque is larger than the GF torque, the output of the speed-change assist torque by the motor 4 is not performed, and the regeneration torque at the start of the speed change continues to be output.

When the clutch torque becomes equal to the GF torque at time t1, the releasing speed of the clutch 31 is increased to the second speed, which is faster than the first speed, and torque obtained by subtracting the clutch torque from the maximum motor output torque is output from the motor 4 as the speed-change assist torque.

When the clutch 31 is completely released at time t2, switching of the gear stages of the transmission mechanism of the transmission 3 is started, during which motor assist by the motor 4 at the maximum motor output torque is performed.

When the switching of the gear stages of the transmission mechanism of the transmission 3 is completed at time t3, engagement of the clutch 31 is started at the third speed, which is substantially equal to the second speed, for example, and the assist torque from the motor 4 is decreased such that its sum with the clutch torque becomes equal to the maximum motor output torque.

When the clutch torque becomes equal to the GF torque at time t4, the connecting speed of the clutch 31 is decreased to the fourth speed, and the output of the motor 4 is maintained at the regeneration torque output by the motor 4 at the start of the speed change.

Thus, in the present embodiment, the control unit 8 increases the releasing speed of the clutch 31 in a clutch releasing process during a speed change of the transmission 3 and causes the motor 4 to output the speed-change assist torque, at a timing according to the output state of torque of the motor 4 at the start of the speed change.

In this manner, the timing for increasing the releasing speed of the clutch 31 in the clutch releasing process is changed according to the output state of torque of the motor 4 at the start of the speed change. Thus, it is possible to suppress vibration of the vehicle at the start of the speed change by switching between the clutch torque and the motor torque while the torque that can be output by the motor 4 is available.

In addition, the control unit 8 increases the releasing speed of the clutch 31 in a clutch releasing process during a speed change of the transmission 3 and causes the motor 4 to output the speed-change assist torque, at a timing according to the output state of power generation torque of the motor 4 at the start of the speed change.

In this manner, the timing for increasing the releasing speed of the clutch 31 in the clutch releasing process is changed according to the output state of power generation torque of the motor 4 at the start of the speed change. Thus, it is possible to increase the releasing speed of the clutch 31 at a timing suitable to the power generation torque of the motor 4 at the start of the speed change, and reduce variation in torque during the speed change.

In addition, since the releasing speed of the clutch 31 is increased, it is possible to shorten the speed change time.

Since the speed change time can be shortened, it is possible to reduce the lag feeling during the speed change.

In addition, since the releasing speed of the clutch 31 is increased, it is possible to shorten assist time of the motor 4 during the speed change and reduce energy consumption of the motor 4.

In addition, the control unit 8 increases the releasing speed of the clutch 31 and causes the speed-change assist torque to be output from the motor 4 when the clutch torque is decreased to predetermined torque in the clutch releasing process during the speed change of the transmission 3.

In this manner, when the clutch torque is decreased to the predetermined torque, the releasing speed of the clutch 31 is increased, and the speed-change assist torque is output from the motor 4. Thus, it is possible to increase the releasing speed of the clutch 31 at a timing when the clutch torque is decreased to the predetermined torque, reduce variation in torque during the speed change, and reduce energy consumption of the motor 4.

In addition, the control unit 8 increases the releasing speed of the clutch 31 and causes the speed-change assist torque to be output from the motor 4 when the clutch torque is decreased to the GF torque in the clutch releasing process during the speed change of the transmission 3.

In this manner, when the clutch torque is decreased to the GF torque, the releasing speed of the clutch 31 is increased, and the speed-change assist torque is output from the motor 4. Thus, it is possible to shorten the speed change time as compared to the case of increasing the releasing speed of the clutch 31 after the clutch torque is decreased to the maximum motor output torque, and reduce the lag feeling during the speed change. In addition, since the releasing speed of the clutch 31 is increased at a timing when the motor 4 can output the assist torque, it is possible to reduce variation in torque during the speed change. In addition, it is possible to shorten assist time of the motor 4 and reduce energy consumption of the motor 4.

In addition, the control unit 8 increases the releasing speed of the clutch 31 and causes the speed-change assist torque to be output from the motor 4 when the total torque is decreased to the maximum motor output torque in the clutch releasing process during the speed change of the transmission 3.

In this manner, when the total torque is decreased to the maximum motor output torque, the releasing speed of the clutch 31 is increased, and the speed-change assist torque is output from the motor 4. Thus, it is possible to shorten the speed change time as compared to the case of increasing the releasing speed of the clutch 31 after the clutch torque is decreased to the maximum motor output torque, and reduce the lag feeling during the speed change. In addition, since the releasing speed of the clutch 31 is increased at a timing when the assist torque that can be output by the motor 4 is available, it is possible to reduce variation in torque during the speed change. In addition, it is possible to shorten assist time of the motor 4 and reduce energy consumption of the motor 4.

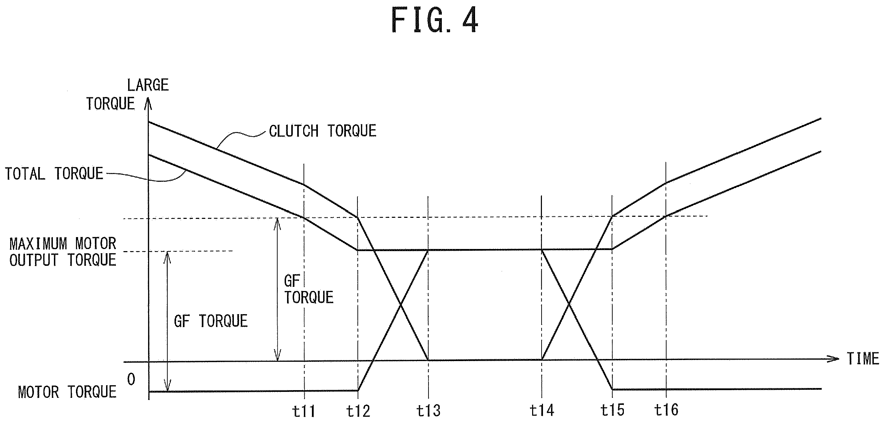

Note that, although the releasing speed of the clutch 31 and the connecting speed of the clutch 31 are changed in two steps in the present embodiment, they may be changed in more than two steps. Figure 4 shows a case of changing the releasing and connecting speeds of the clutch 31 in three steps.

In Figure 4, when a speed change process is started and removal of complete engagement of the clutch 31 is started, the clutch 31 is released at the first speed, the clutch torque decreases, and the torque transmitted to the drive shafts 11 also decreases. At this time, since the clutch torque is larger than the GF torque, the output of the assist torque by the motor 4 is not performed, and the regeneration torque at the start of the speed change continues to be output.

When the total torque becomes equal to the GF torque at time t11, the releasing speed of the clutch 31 is increased to a speed faster than the first speed and slower than the second speed.

When the clutch torque becomes equal to the GF torque at time t12, the releasing speed of the clutch 31 is increased to the second speed, which is faster than the first speed, and torque obtained by subtracting the clutch torque from the maximum motor output torque is output from the motor 4 as the speed-change assist torque.

When the clutch 31 is completely released at time t13, switching of the gear stages of the transmission mechanism of the transmission 3 is started, during which motor assist by the motor 4 at the maximum motor output torque is performed.

When the switching of the gear stages of the transmission mechanism of the transmission 3 is completed at time t14, engagement of the clutch 31 is started at the third speed, which is substantially equal to the second speed, for example, and the assist torque from the motor 4 is decreased such that its sum with the clutch torque becomes equal to the maximum motor output torque.

When the clutch torque becomes equal to the GF torque at time t15, the connecting speed of the clutch 31 is decreased to a speed slower than the third speed and faster than the fourth speed, and the assist torque from the motor 4 is maintained at the regeneration torque output by the motor 4 at the start of the speed change.

When the total torque becomes equal to the GF torque at time t16, the connecting speed of the clutch 31 is decreased to the fourth speed.

In this manner, it is possible to shorten the speed change time, and reduce the lag feeling during the speed change while reducing variation in torque during the speed change.

Although an example where the control unit 8 performs various determinations and calculations based on various pieces of sensor information has been described in the present embodiment, there is no limitation thereto, and the hybrid vehicle 1 may include a communication unit capable of communicating with an external device such as an external server so that the various determinations and calculations are performed by the external device based on detection information of various sensors transmitted from the communication unit, the communication unit receives those determination and calculation results, and various control operations are performed by using those received determination and calculation results.

Although the embodiment of the present invention has been disclosed, it is obvious that those skilled in the art can make changes without departing from the scope of the present invention as disclosed in appended claim 1.

### Reference Signs List

1...hybrid vehicle, 2...engine, 3...transmission (automatic transmission), 4...motor, 6...high-voltage battery (battery), 8... control unit, 11... drive shaft, 31... clutch, 41...temperature sensor, 61...battery state sensor, 81... accelerator position sensor, 82...clutch stroke sensor

## Claims

1. An automatic transmission control device for a hybrid vehicle (1) including an engine (2), a motor (4), an automatic transmission (3) that changes a speed of rotation of the engine (2) and transmits the rotation to a drive shaft (11), and a clutch (31) that releases or connects power transmission between the engine (2) and the drive shaft (11),
the automatic transmission control device comprising a control unit (8) that controls the automatic transmission (3) and the clutch (31) to switch gear stages of the automatic transmission (3), wherein
when performing a speed change of the automatic transmission (3) while causing the motor (4) to output a power generation torque to the drive shaft (11), the automatic transmission control device is **characterized in that** the control unit (8):
starts a clutch releasing while maintaining the power generation torque to the drive shaft (11); and thereafter
increases, if a clutch torque output from the automatic transmission (3) decreases to a torque obtained by summing a maximum motor output torque and the power generation torque, a releasing speed of the clutch (31) and causes the motor (4) to output a speed-change assist torque.

## Patentansprüche

1. Eine Automatikgetriebe-Steuervorrichtung für ein Hybridfahrzeug (1) mit einer Maschine (2), einem Motor (4), einem Automatikgetriebe (3), das eine Drehzahl der Maschine (2) ändert und die Drehung auf eine Antriebswelle (11) überträgt, und einer Kupplung (31), die eine Leistungsübertragung zwischen der Maschine (2) und der Antriebswelle (11) löst oder verbindet,
die Automatikgetriebe-Steuervorrichtung eine Steuereinheit (8) umfasst, die das Automatikgetriebe (3) und die Kupplung (31) steuert, um Gangstufen des Automatikgetriebes (3) zu schalten, wobei
wenn eine Geschwindigkeitsänderung des Automatikgetriebes (3) durchgeführt wird, während der Motor (4) veranlasst wird, ein Leistungserzeugungsdrehmoment an die Antriebswelle (11) auszugeben, die Automatikgetriebe-Steuervorrichtung **dadurch gekennzeichnet ist, dass** die Steuereinheit (8):
ein Auskuppeln startet, während das Leistungserzeugungsdrehmoment an die Antriebswelle (11) aufrechterhalten wird; und danach
falls ein von dem Automatikgetriebe (3) ausgegebenes Kupplungsdrehmoment auf ein Drehmoment abfällt, das durch Summieren eines maximalen Motorausgabedrehmoments und des Leistungserzeugungsdrehmoments erhalten wird, eine Auskuppelgeschwindigkeit der Kupplung (31) erhöht, und den Motor (4) veranlasst, ein Drehzahländerungs-Unterstützungsdrehmoment auszugeben.

## Revendications

1. Un dispositif automatique de commande de la transmission d'un véhicule (1) hybride, comprenant un groupe (2) propulseur, un moteur (4), une transmission (3) automatique qui change une vitesse de rotation du groupe (2) propulseur et transmet la rotation à un arbre (11) d'entraînement, et un embrayage (31) qui débraie ou embraie une transmission de puissance entre le groupe (2) propulseur et l'arbre (11) d'entraînement,
le dispositif automatique de commande de la transmission comprenant une unité (8) de commande, qui commande la transmission (3) automatique et l'embrayage (31) pour commuter des étages de vitesse de la transmission (3) automatique, dans lequel
lorsque l'on effectue un changement de vitesse de la transmission (3) automatique tout en faisant en sorte que le moteur (4) envoie un couple de production de puissance à l'arbre (11) d'entraînement, le dispositif automatique de commande de la transmission est **caractérisé en ce que** l'unité (8) de commande :
commence un débrayage tout en maintenant le couple de production de puissance envoyé à l'arbre (11) d'entraînement ;
et ensuite augmente, si la sortie du couple d'embrayage de la transmission (3) automatique diminue à un couple obtenu en faisant la somme d'un couple maximum de sortie du moteur et du couple de production de puissance, une vitesse de débrayage du débrayage (31) et fait en sorte que le moteur (4) sorte un couple d'assistance au changement de vitesse.
